# EUROPEAN PATENT APPLICATION

(11) **EP 2 528 324 A2**
(43) Date of publication of application: **28.11.2012**
(21) Application number: 12171936.3
(22) Date of filing: 12.09.2007
(51) Int. Cl.: H04N 5/91, G11B 20/10, H04N 5/76, H04N 5/78

(54) **Digital media recorder based advertising**

(30) Priority: 14.09.2006 US 531993
(62) Divisional of application: 07804910.3
(71) Applicant: Nortel Networks Limited, St.Laurent, Québec H4S 2A9 (CA)
(72) Inventor: Sylvain, Dany, Gatineau, Québec J8T 6A6 (CA)
(74) Representative: Boyce, Conor

(57) **Abstract**

A method of presenting selected advertisements in association with recorded media content comprises receiving (204, 206) a request to record media content, the request comprising a user identifier and a program identifier. An alternate advertisement is selected (212) based on at least one of a user profile associated with the user identifier and the program identifier. The requested media content is received (224) at a digital media recorder, the requested media content comprising an original advertisement. The received media content comprising the original advertisement is recorded (226). The media content is presented (256, 258) to the user with the selected alternate advertisement instead of the original advertisement.

## Description

### Field of the Invention

The present invention relates to advertising, and in particular to effectively providing advertisements to digital media recorder users.

### Background of the Invention

Consumers and broadcasters are in a constant battle over advertising. Advertisers must present advertisements to consumers, who are generally trying to avoid the advertisements (ads). A major arena for this advertising battle is in the consumer's home and is centered around the consumer's digital video recorder (DVR).

DVRs allow consumers to record television programs, which contain ads, for viewing at a later time. In addition to the convenience of watching a program at any desired time, consumers often skip through the ads, much to the chagrin of the advertisers and broadcasters who rely on the advertising revenues. To counter the consumer's efforts to skip ads during playback of recorded programs, broadcasters are varying advertising breaks to make simply skipping forward 30, 60, 90, or 120 seconds less effective for consumers. Further, broadcasters are injecting brief video segments between ads that appear to be the recorded program. As consumers are fast-forwarding through the ads, the video segments trick the consumers into transitioning into a regular viewing mode, increasing the likelihood of the consumers viewing the ad after the short video segment.

As the advertising battle continues, consumers are becoming more annoyed and more capable of skipping ads with their DVRs. All the while, broadcasters must find a way to deliver the ads to the consumers to sustain their viability. Accordingly, there is a need for a way to allow consumers to effectively watch programs when desired, skip commercials within those programs, and save time viewing programs by using their DVRs, while allowing broadcasters to deliver the advertising messages of their advertisers. There is a further need to deliver more pertinent or targeted advertising to consumers who regularly employ DVRs to view previously recorded programs.

### Summary of the Invention

The present invention provides a technique for broadcasters to deliver advertising messages in a more effective way to digital media recorder users, wherein the digital media recorders may be configured to record various types of audio or video programs having advertisements therein. When playback of a recorded program is requested, the digital media recorder will play at least one alternate advertisement prior to beginning playback of the recorded program. After the alternate advertisements are played, the recorded media content is played without the original advertisements. As such, the original advertisements in the recorded program are skipped during playback in exchange for presenting one or more alternate advertisements prior to beginning playback of the recorded program.

In an alternative embodiment, one or more of the original advertisements appearing in the recorded program are replaced with alternate advertisements during playback of the recorded program. The alternate advertisements may be selected by the user, or targeted for the user based on information provided by the user or the user's household, or information obtained about the user or the user's household. With the present invention, digital media recorder users are presented with a more enjoyable user experience, and broadcasters' advertising goals are met by allowing the user to have control over when, how, and perhaps what advertisements are presented to the user in association with playback of a recorded program.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.

FIGURE 1 is a block representation of a video distribution environment according to one embodiment of the present invention.

FIGURE 2 is a communication flow diagram illustrating techniques consumers use to skip ads during playback of previously recorded programs.

FIGURES 3A-3C illustrate a communication flow showing delivery of alternate ads according to a first embodiment of the present invention.

FIGURES 4A-4C illustrate a communication flow showing delivery of alternate ads according to a second embodiment of the present invention.

FIGURE 5 is a block representation of a digital video recorder according to one embodiment of the present invention.

FIGURE 6 is a block representation of a viewing server according to one embodiment of the present invention.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

The present invention represents a compromise between consumers who use digital media recorders (DMRs), such as digital video recorders (DVRs), and broadcasters with respect to advertisements (ads) provided in video content. In one embodiment, if a consumer agrees to watch one or more alternate ads at the beginning of a program, the broadcaster will allow the DVR to automatically skip the ads that were originally provided in the video content of the recorded program during playback. As such, consumers can watch the program without commercial interruptions in a condensed period of time, while the broadcasters have an attentive audience for one or more ads prior to allowing playback of the program. Techniques may be employed to ensure the alternate ads are being viewed prior to beginning playback. These techniques may include requiring periodic inputs at the DVR to ensure the consumer is watching the alternate ads. In another embodiment, select if not all of the normal ads in the video content of the program are replaced with ads targeted to the particular consumer based on the consumer's preferences or data gathered relating to the consumer.

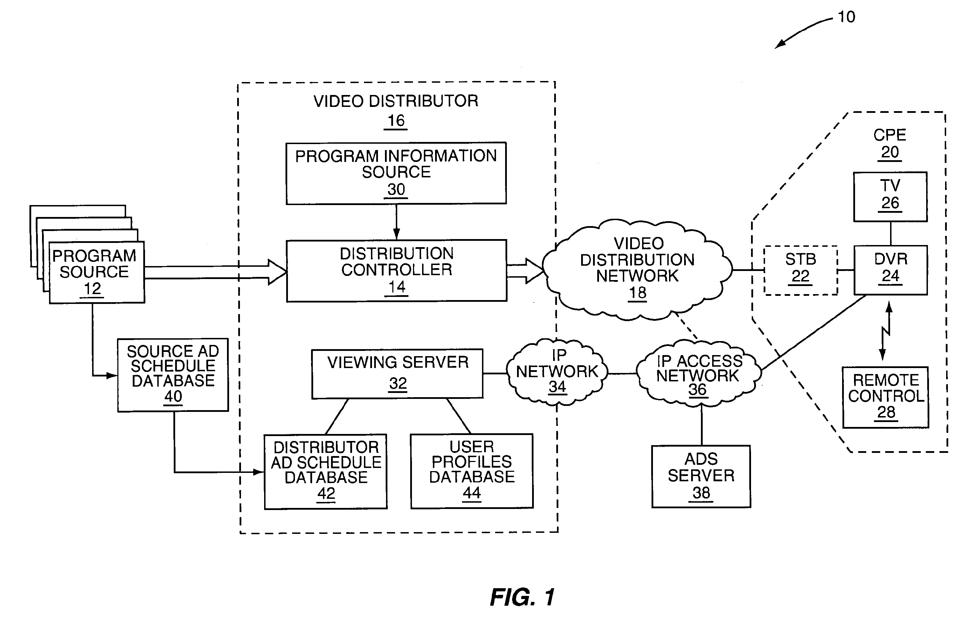

Prior to delving into the details of the present invention, an overview of a video distribution environment is provided according to one embodiment of the present invention. Although the following description is focused on video, those skilled in the art will recognize that the concepts of the present invention are applicable to various types of media, including audio. With reference to Figure 1, a video distribution environment 10 is illustrated. Program sources 12 feed video content for various programs to a distribution controller 14, such as a head end combiner of a video distributor 16 for distribution of the programs. The video distributor 16 may be a cable, satellite, or Internet Protocol television (IPTV) service provider, or the like. The distribution controller 14 effectively delivers video content for the various programming via a video distribution network 18 to customer premise equipment (CPE) 20, such as a set-top box (STB) 22 or equivalent function provided in a DVR 24 or television (TV) 26. The set-top box 22 processes the incoming signals to recover the transmitted video content of the desired channel or program and, in the illustrated embodiment, provides that information to the DVR 24. The DVR 24 is configured to respond to user input directly or via an associated remote control 28 to select the programs to record and facilitate the playback of recorded programs in traditional fashion.

The set-top box 22 of the DVR 24 may obtain electronic programming guides, along with individual programming information, from a program information source 30 of the video distributor 16. The electronic programming guides may be delivered to the set-top box 22 of the DVR 24 over the video distribution network 18 along with the video content of the programs, and may be displayed to the consumer to provide a viewing guide as well as information about particular programs in a dynamic fashion in response to consumer request. The electronic programming guides may be used by the DVR 24 to enable efficient program selection and recording based on input by the consumer.

For the present invention, the advertising provided in the original video content of the programs is manipulated to provide the consumer with a better viewing experience while maintaining the goals of the broadcasters in presenting ads to the consumer. Accordingly, the DVR 24 must be able to obtain and use advertising scheduling information, which may include the identity and timing information of the ads in the video content. The ad scheduling information may be gathered from a remote source or may be obtained from the video content itself or information delivered with the video content for the recorded program. The DVR 24 may need authorization to identify ads in the video content and skip or replace the identified ads. With the ad scheduling information, the DVR 24 can identify what part of the video content of a program is advertising and respond in an appropriate manner.

Another aspect of the invention requires the DVR 24 to obtain alternate ads to provide to the consumers in lieu of the ads originally provided in the video content of the recorded program. The alternate ads may be provided to the consumer prior to allowing the consumer to view the recorded program. If the consumer agrees to watch the alternate ads at the beginning of the program, the DVR 24 will automatically skip over the original ads during playback of the recorded program. The DVR 24 will use the advertising scheduling information to identify and skip over the original ads during playback of the video content of the recorded program. In the alternative embodiment, the alternate ads are provided to the consumer instead of the original ads during playback of the video content of the recorded program. Accordingly, the consumer will still view ads throughout the video content of the recorded program, yet these ads will be alternate ads that are provided based on information provided by or derived from the consumer to facilitate targeted advertising.

A viewing server 32 is provided at the video distributor 16 to assist in controlling advertising according to the present invention. Ad scheduling information and alternate ads may be delivered to the DVR 24 through an IP network 34 or the like, and a local IP access network 36, which may or may not be part of the video distribution network 18. For example, a cable provider may provide television, telephone, and high-speed internet access over a common video distribution network 18. However, a satellite provider may deliver video content via satellite and employ a digital subscriber line (DSL) of a telephone network to obtain information from the DVR 24 as well as provide the advertising schedule information and alternate advertisements to the DVR 24. In yet another embodiment, the alternate ads may be delivered over a dedicated program channel and be recorded by the DVR 24 in light of control information provided by the viewing server 32. Various examples will be provided further below. The alternate ads, when provided via the IP access network 36 and IP network 34, may be maintained on an advertisements (ads) server 38, which is coupled to the IP access network 36.

With continued reference to Figure 1, an exemplary configuration is provided for delivering advertisement scheduling information and alternate ads to the DVR 24. Initially, the advertising scheduling information for the ads originally provided in the programs is obtained from the program sources 12 and stored in corresponding source ad schedule databases 40, which will deliver the advertising schedule information to a distributor ad schedule database 42 of the video distributor 16. The video distributor 16 may also keep a user profiles database 44 having profiles for the various subscribers of the video distributor 16. The subscribers are the consumers who are viewing the ads associated with the various programs. From these user profiles in the user profiles database 44, alternate ads may be selected according to either embodiment of the present invention. Notably, user profiles need not be used to provide the alternate ads provided at the beginning of playback of a recorded program in lieu of the original ads provided with the program.

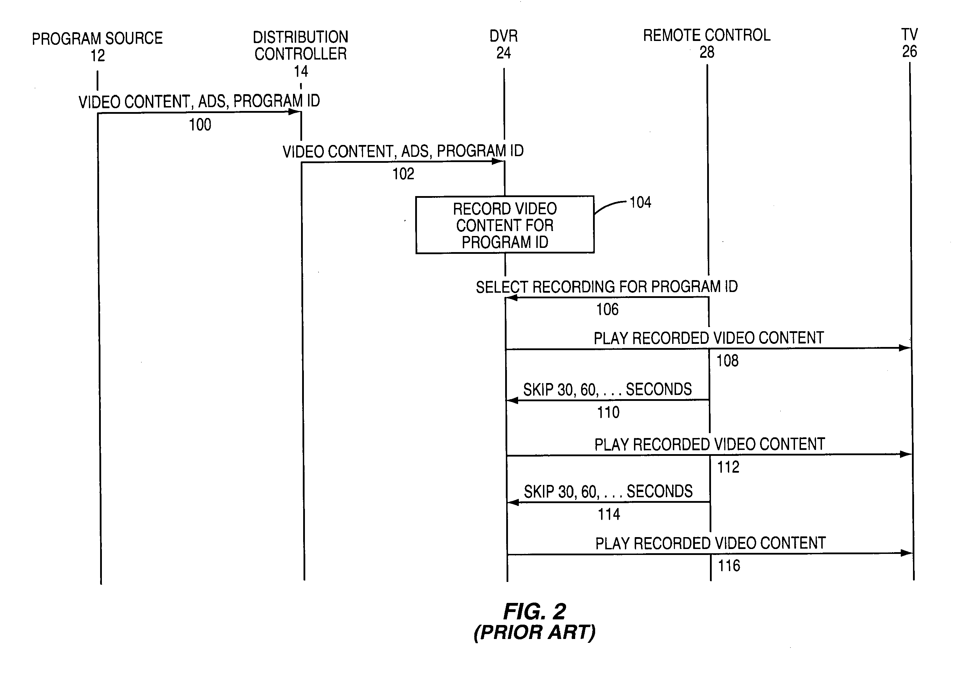

With reference to Figure 2, a communication flow illustrating traditional use of a DVR 24 to skip advertisements during playback is provided. Initially, a program source 12 will deliver video content with ads for a program having a unique program ID to the distribution controller 14 of a video distributor 16. The video content with the incorporated ads may be delivered to the DVR 24 along with the corresponding program ID (step 102). The DVR 24 may record the video content for the program ID (step 104). At a later time, the DVR 24 may receive instructions via the remote control 28 to select the previously recorded program corresponding to the program ID (step 106), wherein the DVR 24 will begin playing the recorded video content of the recorded program for viewing on the TV 26 (step 108). Throughout the video content, the consumer may elect to fast-forward through or skip ahead for a defined amount of time in an effort to skip over the ads included in the video content of the program (steps 110-116).

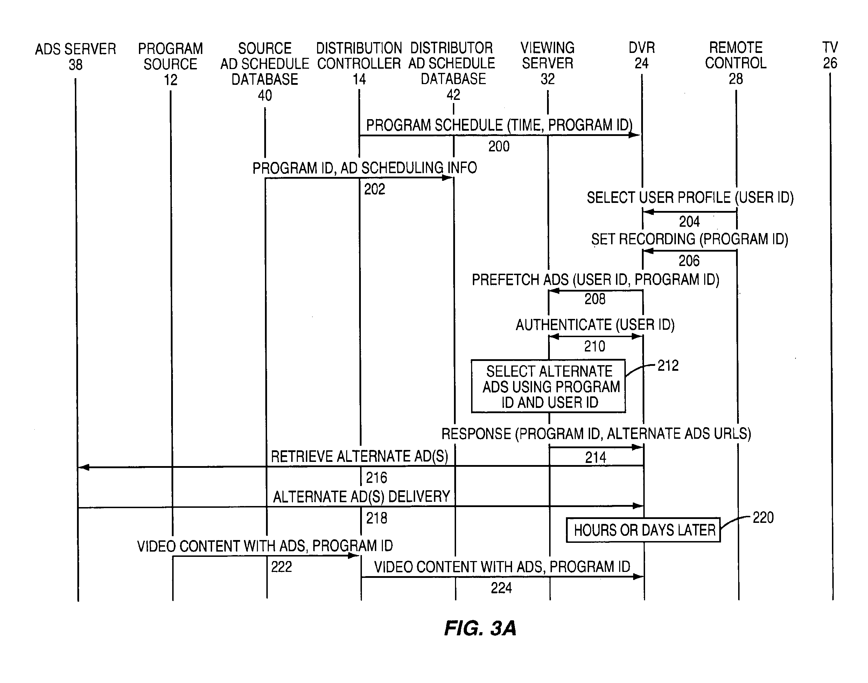

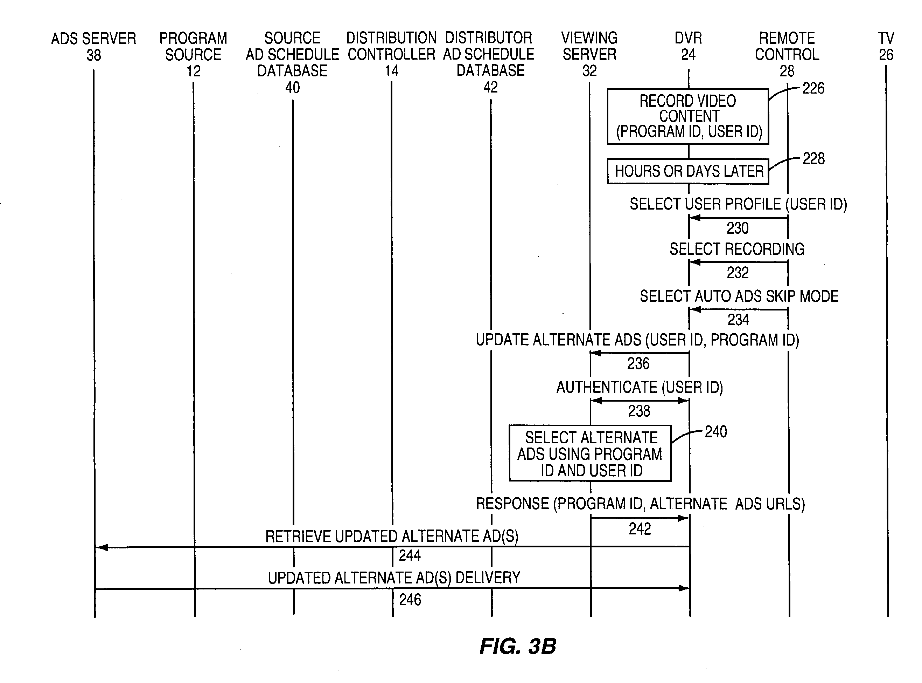

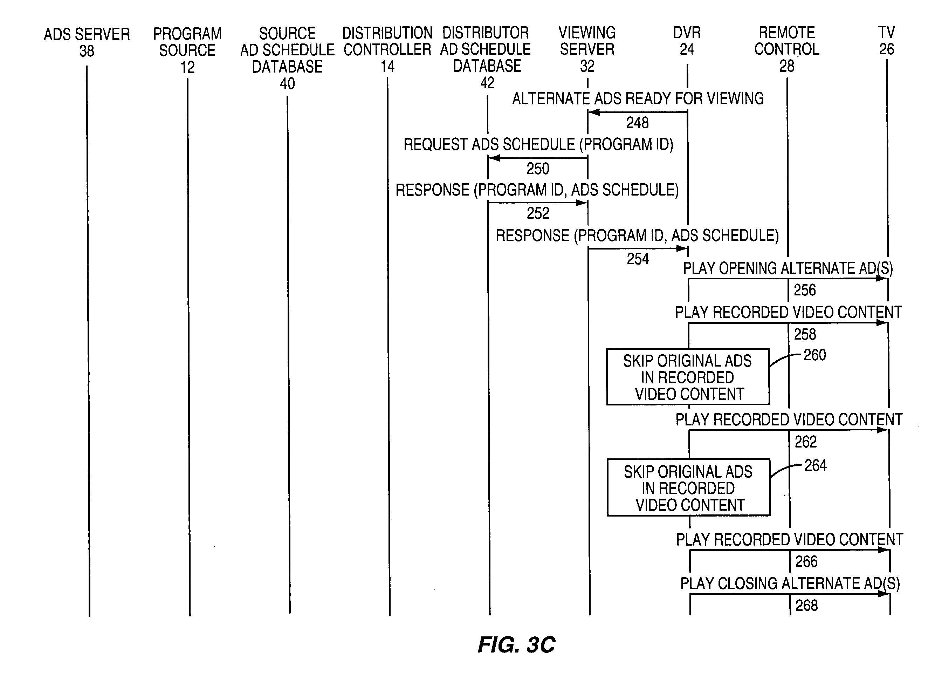

With reference to Figures 3A-3C, a communication flow is provided where one or more alternate ads are provided to the consumer prior to beginning playback in exchange for allowing the DVR 24 to skip over the original ads provided in the video content of the recorded program. Initially, assume the program schedules for the various channels are provided from the distribution controller 14 to the DVR 24 (step 200), for example via data insertion in the video vertical blanking intervals. Program schedules will identify the time and program IDs for the various programs on the different channels. For each of these programs, the source ad schedule database 40 will provide ad scheduling information for each program, where each program is identified by the appropriate program ID to the distributor ad schedule database 42 (step 202).

Meanwhile, the consumer using the remote control 28 may select a desired user profile for her given user ID at the DVR 24 (step 204). The consumer may also set a recording instruction for a given program having a corresponding program ID (step 206). In light of the recording instructions, the DVR 24 may prefetch alternate ads for the given program ID, and perhaps for the user ID corresponding to the user profile set by the consumer, from the viewing server 32 by sending an appropriate request (step 208). The viewing server 32 and the DVR 24 will cooperate with one another to authenticate the request for the given user ID (step 210). The viewing server 32 will then select alternate ads using the given program ID, user ID, or a combination thereof (step 212), and send a response back to the DVR 24 including uniform resource locators (URLs) to use for obtaining the alternate ads, along with the corresponding program ID (step 214). The DVR 24 will use the URLs for the alternate ads to send a request to the ads server 38 (step 216). The ads server 38 will respond by delivering the alternate ads to the DVR 24 (step 218).

Hours or days later (step 220), the video content for the program to be recorded will be delivered from the program source 12 to the distribution controller 14 (step 222). The video content will include original ads and be associated with the unique program ID. The distribution controller 14 will deliver the video content with the ads to the DVR 24 (step 224), which will record the video content and associate the program ID, and perhaps the user ID, with the recorded video content (step 226). Hours or days later (step 228), the consumer will use the remote control 28 to select her user profile (step 230) and select the recorded program for viewing (step 232).

At this point, the consumer has the option of viewing the recorded program in a traditional fashion or selecting an "automatic ads skip mode." If the automatic ads skip mode is selected (step 234), the DVR 24 will recognize that alternate ads should be played prior to beginning playback of the video content and, during playback of the video content, the original ads provided with the video content should be skipped. The DVR 24 may take action to see if any updates are available for the alternate ads that were originally prefetched when the recording information was originally set. As such, the DVR 24 may send an update alternate ads request identifying the user ID and program ID to the viewing server 32 (step 236). The viewing server 32 and the DVR 24 may run through an authentication procedure for the given user ID (step 238), wherein the viewing server 32 will select alternate ads using the program ID, the user ID, or a combination thereof (step 240).

The viewing server 32 will then send a response with the URLs for the alternate ads, along with the program ID to the DVR 24 (step 242). If there are updates for the alternate ads, the DVR 24 will retrieve the updated alternate ads by sending an appropriate request to the ads server 28 (step 244), which will respond by delivering the alternate ads to the DVR 24 (step 246). The DVR 24 will then send a message to the viewing server 32 indicating that the alternate ads are ready for viewing (step 248). The viewing server 32 will request the ads scheduling information for the program from the distributor ad schedule database 42 using the program ID (step 250). The distributor ad schedule database 42 will identify the ad scheduling information for the given program ID and provide the ads scheduling information to the viewing server 32 for the program ID (step 252). The viewing server 32 will send the ad scheduling information to the DVR 24 in association with the program ID (step 254). Alternatively, the ads schedule may be inserted right in the video content but may be encrypted. In this case, the exchange of information with the ad schedule database 42 may be to retrieve the decryption key. Once the ad scheduling information is retrieved, the DVR 24 will then play one or more "opening" alternate ads on the TV 26 (step 256), and then begin playing the recorded video content of the program (step 258).

Using the ad scheduling information, the DVR 24 will identify the relative location of the original ads provided in the video content, and skip these original ads during playback of the video content of the recorded program to provide an advertisement-free viewing experience for the consumer (step 260). By using the ads scheduling information, the DVR 24 can seamlessly play the video content without playing the ads. As such, when one or more ads are skipped, the DVR 24 will continue playing the recorded video content (step 262), and repeat the process by skipping the original ads in the recorded video content (step 264) and playing the recorded video content (step 266). At the end of the program, the DVR 24 may play any available closing alternate ads (step 268).

Although the alternate ads in the above embodiment were illustrated as being provided by the ad server 38, the DVR 24 may obtain the alternate ads in various ways, including obtaining them from dedicated advertising channels provided by the video distributor 16. Further, the DVR 24 may require periodic consumer feedback via the remote control 28 or directly at the DVR 24 to ensure that the opening alternate ads are viewed prior to beginning playback of the recorded video content. For example, the DVR 24 may require the consumer to press a certain button on the remote control 28 every thirty seconds, or at the beginning of each successive ad.

In an alternative embodiment, the user may pay a fee or subscribe to a higher level of service to have all or certain ads skipped during playback. Instead of agreeing to watch certain ads before a commercial-free viewing of a program, the user will simply pay to skip the commercials. Presentation of the program would take place as described above.

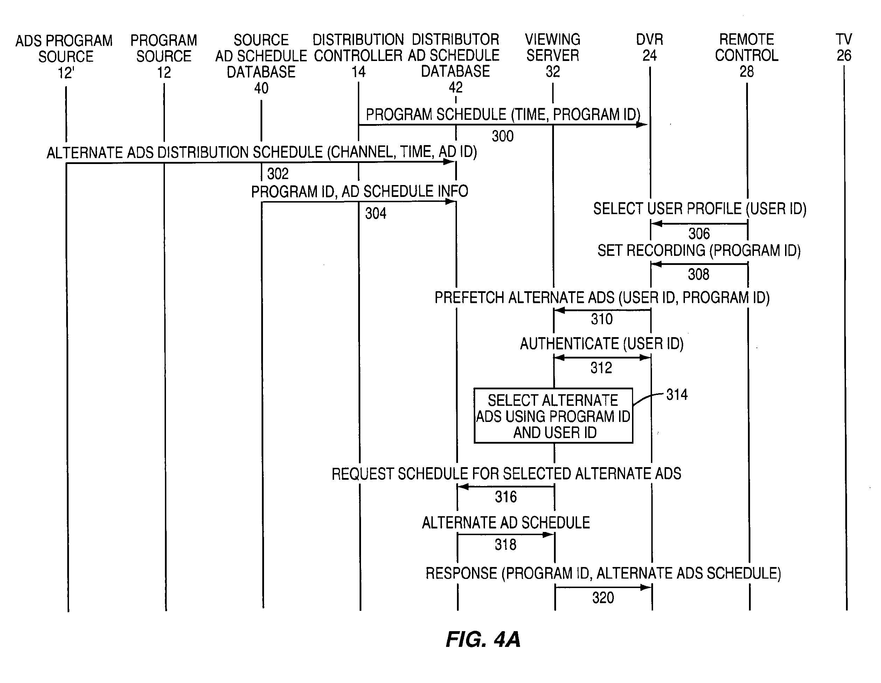

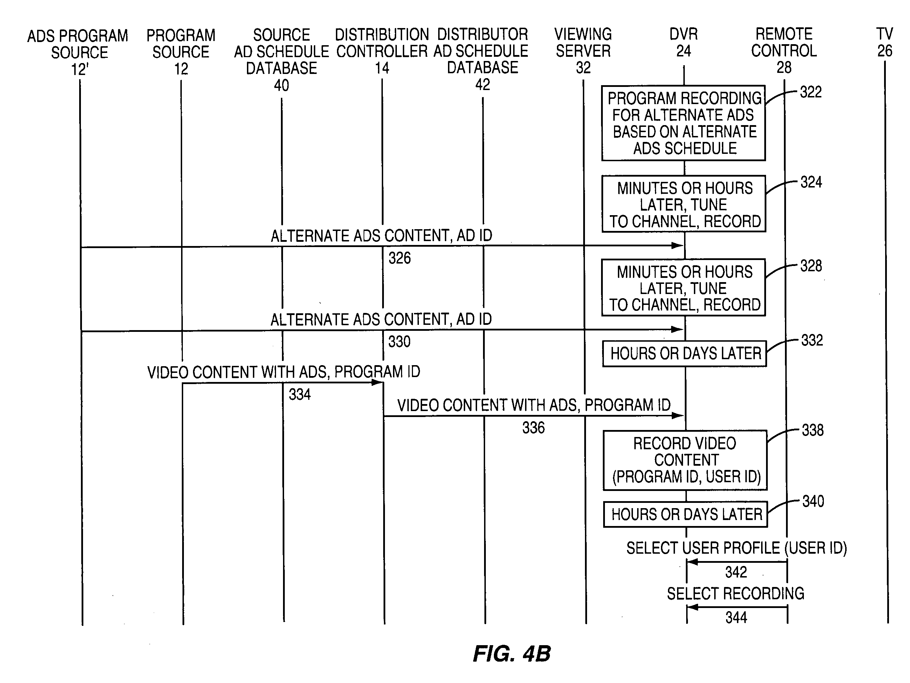

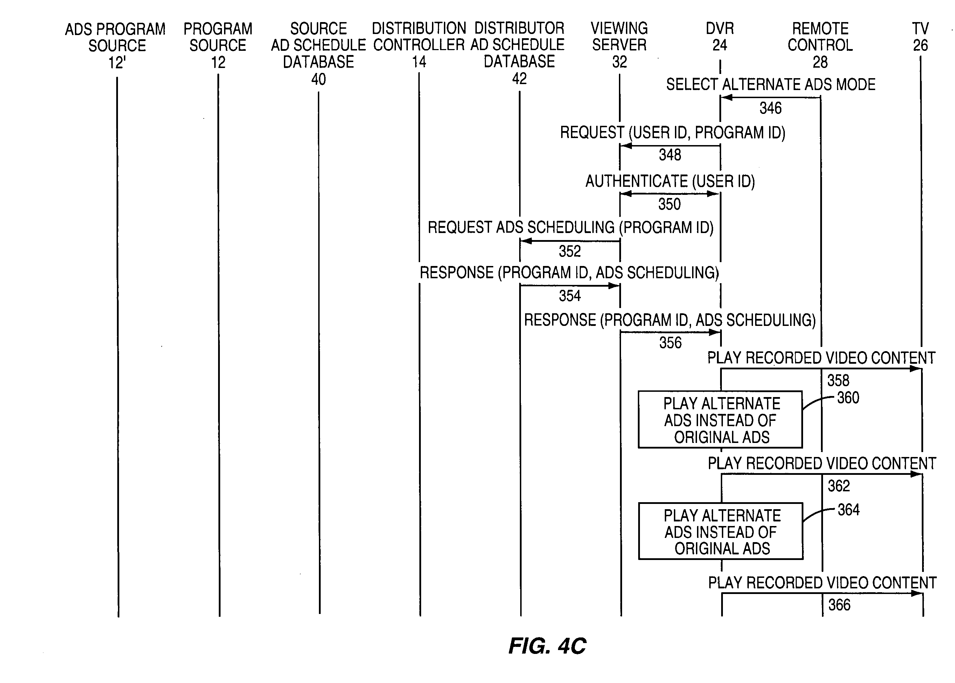

Turning now to Figures 4A-4C, an alternate embodiment of the present invention is illustrated wherein alternate ads are provided to the consumer in place of the original ads. In this embodiment, the alternate ads are provided during playback of the recorded video content in the same time slots of the original ads. Initially, the distribution controller 14 may provide program schedule information including program times and program IDs to the DVR 24 (step 300). Again, the program schedule information allows the DVR 24 to provide an electronic program guide to the consumer for setting recording as well as selecting channels and programs to view in real time. An ads program source 12' may provide an alternate ads distribution schedule to the distributor ad schedule database 42 (step 302). In this example, there is essentially a dedicated channel or channels where alternate ads are made available for recording. The alternate ads distribution schedule will identify the channel, time, and advertising ID (ad ID) for the various alternate ads to be broadcast. The source ad schedule database 40 will provide the ad scheduling information for the original ads in the video content of the programs to the distributor ad schedule database 42 (step 304).

To initiate recording, the consumer through the remote control 28 may select her user profile, which is associated with a given user ID, at the DVR 24 (step 306), as well as program the DVR 24 to record a certain program having a program ID (step 308). The DVR 24 may send a request to prefetch alternate ads based on the program ID, user ID, or a combination thereof (step 310). Based on the request, the viewing server 32 and the DVR 24 will cooperate with one another to authenticate the user (step 312). After authentication, the viewing server 32 will select the alternate ads using the program ID, user ID, or a combination thereof (step 314). Based on the selected alternate ads, the viewing server 32 may send a request to the distributor ads schedule database 42 to identify scheduling information for the selected alternate ads (step 316). The distributor ad schedule database 42 will provide the alternate ad schedule for the selected ads (step 318). The viewing server 32 will then provide a response to the DVR 24 (step 320). The response will include the alternate ad schedule for the program ID corresponding to the program to be recorded.

Based on the alternate ad schedule information provided from the viewing server 32, the DVR 24 will program recording for the alternate ads based on the alternate ad schedule (step 322). Minutes or hours later, the DVR 24 will tune to the appropriate channel and record the alternate ads (step 324), which will be delivered from the ads program source 12' (step 326). If multiple alternate ads are being used, they may be delivered at different times, and as such, the DVR 24 may at a later time tune to the same or different channel and record additional alternate ads (step 328), which again may be provided from the ads program source 12' (step 330).

Hours or days later (step 332), the video content with original ads for the program to be recorded is delivered from the program source 12 to the distribution controller 14 (step 334). The distribution controller 14 will deliver the video content with the original ads to the DVR 24 (step 336), which will record the video content for the program and maintain the program ID and perhaps the user ID (step 338). Hours or days later (step 340), The consumer may wish to view the recorded video content of the program, and as such, the consumer may use the remote control 28 to select a given user profile (step 342) and select the recording for playback (step 344).

Prior to playback, the consumer may select an alternate ads mode (step 346), which will trigger replacement of the original ads with alternate ads during playback of the original content. If this alternate ads mode is selected, the DVR 24 will send a request to the viewing server 32 indicating the same (step 348). The viewing server 32 and the DVR 24 will go through the authentication process for the consumer in light of the provided user ID (step 350), and the viewing server 32 will request the ads scheduling information for the ads originally provided in the video content from the distributor ad schedule database 42 (step 352). The distributor ad schedule database 42 will obtain the ads scheduling information for the recorded program, and send a response providing the ads scheduling information (step 354). The viewing server 32 will forward the ads scheduling information for the recorded program to the DVR 24 (step 356). The DVR 24 will begin playing the recorded video content (step 358).

Based on the ads scheduling information for the recorded program, the DVR 24 will recognize the location of the original ads, and instead of playing the original ads will play the alternate ads during playback of the recorded video content (step 360). This process is repeated for each ad that was provided in the video content in which an alternate ad should be provided (steps 362, 364, and 366).

Notably, not all of the ads originally provided in the video content will be replaced with alternate ads, or need to be replaced with alternate ads. Those skilled in the art will recognize that all or only select of the ads originally provided in the video content may be replaced with alternate ads. Selection of the alternate ads may be based on the particular consumer, a group of which the consumer is a part, the source providers, or any combination thereof. This aspect of the present invention is particularly beneficial for targeted advertisements, where the alternate ads are selected based on the user ID, which may be associated with an individual consumer or the household in which the consumer resides. The alternate ads may be selected by the consumer or chosen in light of preferences provided by the consumer. The alternate ads may be chosen based on viewing characteristics or other data obtained that relates to the consumer.

Further, one illustrated embodiment depicts obtaining the alternate ads from ad content provided from an ads program source 12' that is dedicated to providing advertising content. Those skilled in the art will recognize that the alternate ads may be obtained from a variety of sources, including the ad server 38.

With the present invention, consumers are provided multiple viable options for obtaining a more enjoyable viewing experience during the playback of recorded video content including ads. Viewers may opt to view one or more ads prior to playback of the recorded video content in exchange for having the DVR 24 automatically skip the provided ads. These ads may or may not be targeted to the specific user. Alternatively, the consumer may elect to have some or all of the original ads in the recorded video content be replaced with alternate ads during playback of the video content. These ads may be targeted to the specific consumer or consumer's household based on metrics gathered directly or indirectly from the consumer or those in the consumer's household.

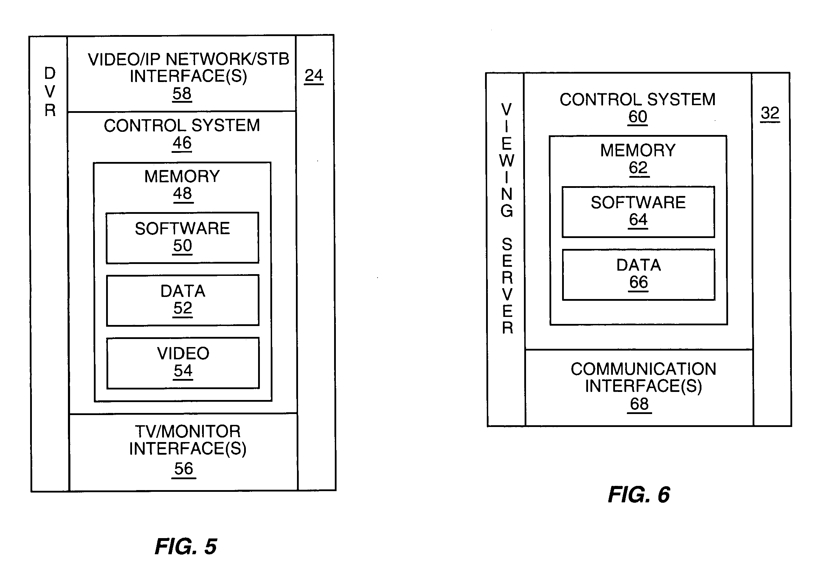

With reference to Figure 5, a block representation of a DVR 24 is illustrated. The DVR 24 will include a control system 46 having memory 48 with the requisite software 50 and data 52 to operate as described above. The memory 48 will also be sufficient to store video content 54 corresponding to recorded program and alternate ads. The DVR 24 may include one or more TV/monitor interfaces 56 adapted to deliver an appropriate signal to the TV 26 as well as one or more video/IP network/STB interfaces 58 adapted to receive video content from the video distributor 16, and adapted to communicate with the viewing server 32, ads server 38, or any other entity required for implementation of the present invention.

With reference to Figure 6, a block representation of a viewing server 32 is illustrated. The viewing server 32 will include a control system 60 having memory 62 with the requisite software 64 and data 66 to operate as described above. The viewing server 32 will have one or more communication interfaces 68 to facilitate communications with the DVR 24, user profiles database 44, distributor ad schedule database 42, ad server 38, and any other entity necessary for implementation of the present invention.

Those skilled in the art will recognize improvements and modifications to the preferred embodiments of the present invention. All such improvements and modifications are considered within the scope of the concepts disclosed herein and the claims that follow.

## Claims

1. A method of presenting selected advertisements in association with recorded media content, the method comprising:
receiving (204, 206) a request to record media content, the request comprising a user identifier and a program identifier;
selecting (212) an alternate advertisement based on at least one of a user profile associated with the user identifier and the program identifier;
receiving (224) the requested media content at a digital media recorder, the requested media content comprising an original advertisement;
recording (226) the received media content comprising the original advertisement;
presenting (256, 258) the media content to the user with the selected alternate advertisement instead of the original advertisement.

2. The method of claim 1, further comprising authenticating the user identifier.

3. The method of claim 1, further comprising obtaining the selected alternate advertisement based on information identifying a source of the alternate advertisement.

4. The method of claim 3, wherein the information identifying a source of the alternate advertisement comprises a uniform resource locator (URL).

5. The method of claim 3, wherein the information identifying a source of the alternate advertisement comprises alternate advertisement scheduling information.

6. The method of claim 1, further comprising storing user profiles in association with user identifiers.

7. The method of claim 1, further comprising selecting the alternate advertisement based on the program identifier in conjunction with the user profile.

8. The method of claim 1, wherein selecting the alternative advertisement is performed after recording the received media content.

9. A system for presenting selected advertisements in association with recorded media content, the system comprising:
means for receiving (204, 206) a request to record media content, the request comprising a user identifier and a program identifier;
means for selecting (212) an alternate advertisement based on a user profile associated with the user identifier;
means for receiving (224) the requested media content at a digital media recorder,
the requested media content comprising an original advertisement;
means for recording (226) the received media content comprising the original advertisement; and
means for presenting (256, 258) the media content to the user with the selected alternate advertisement instead of the original advertisement.

10. The system of claim 9, further comprising means for authenticating the user identifier.

11. The system of claim 9, further comprising means for obtaining the selected alternate advertisement based on information identifying a source of the alternate advertisement.

12. The system of claim 11, wherein the information identifying a source of the alternate advertisement comprises a uniform resource locator (URL).

13. The system of claim 11, wherein the information identifying a source of the alternate advertisement comprises alternate advertisement scheduling information.

14. The system of claim 9, further comprising means for storing user profiles in association with user identifiers.

15. The system of claim 9, further comprising means for selecting the alternate advertisement based on the program identifier in conjunction with the user profile.
